(19) Europäisches Patentamt
European Patent Office
Office européen des brevets

(11) EP 0 530 599 B1

(12) EUROPÄISCHE PATENTSCHRIFT

(45) Veröffentlichungstag und Bekanntmachung des Hinweises auf die Patenterteilung:
**08.05.1996 Patentblatt 1996/19**

(51) Int Cl.[6]: **C08F 10/00**

(21) Anmeldenummer: **92114197.4**

(22) Anmeldetag: **20.08.1992**

(54) **Verfahren zum Herstellen von Homo- und Copolymerisaten des Propens mittels eines Ziegler-Natta-Katalysatorsystems**

Process for the preparation of homo- and copolymers of propene with a Ziegler-Natta catalyst system

Procédé de production d'homo- et copolymères de propene avec Ziegler-Natta catalysateur

(84) Benannte Vertragsstaaten:
**BE DE ES FR GB IT NL**

(30) Priorität: **30.08.1991 DE 4128829**

(43) Veröffentlichungstag der Anmeldung:
**10.03.1993 Patentblatt 1993/10**

(73) Patentinhaber: **BASF Aktiengesellschaft**
**D-67063 Ludwigshafen (DE)**

(72) Erfinder:
- **Kerth, Juergen, Dr.**
  **W-6719 Carlsberg (DE)**
- **Hemmerich, Rainer, Dr.**
  **W-6718 Grünstadt (DE)**
- **Koelle, Peter, Dr.**
  **W-6700 Ludwigshafen (DE)**
- **Mueller, Patrik, Dr.**
  **W-6750 Kaiserslautern (DE)**

(56) Entgegenhaltungen:
**EP-A- 0 306 867**
**EP-A- 0 421 197**
**EP-A- 0 427 080**

EP 0 530 599 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

Die vorliegende Erfindung betrifft ein Verfahren zum Herstellen von Homopolymerisaten des Propens sowie Copolymerisaten des Propens mit untergeordneten Mengen anderer $C_2$- bis $C_{12}$-, insbesondere $C_2$- bis $C_6$-α-Mono-olefine durch Polymerisation, insbesondere durch Trockenphasenpolymerisation, des bzw. der Monomeren bei Temperaturen von 20 bis 160, insbesondere 50 bis 120°C und Drücken von 1 bis 100, insbesondere 20 bis 70 bar, mittels eines Ziegler-Natta-Katalysatorsystems aus

(1) einer Titankomponente, die auf einem feinteiligen, formgebenden Kieselgel basiert und Titan, Magnesium, Chlor sowie ein Benzolcarbonsäurederivat enthält,

(2) einer Aluminiumkomponente der Formel

$$Al\ R_3,$$

worin steht

R für einen nicht mehr als 8, insbesondere nicht mehr als 4 Kohlenstoffatome aufweisenden Alkylrest, sowie

(3) einer Silankomponente der Formel

$$R^1_n Si(OR^2)_{4-n},$$

worin stehen

$R^1$ für einen nicht mehr als 16, vorzugsweise nicht mehr als 10 Kohlenstoffatome aufweisenden Kohlenwasserstoffrest gesättigt-aliphatischer und/oder aromatischer Natur,

$R^2$ für einen nicht mehr als 15, vorzugsweise nicht mehr als 8, und insbesondere nicht mehr als 4 Kohlenstoffatome aufweisenden Alkylrest, und

n für eine Zahl von 0 bis 3, vorzugsweise von 0 bis 2, und insbesondere die Zahl 1 oder 2,

mit den Mapgaben, daß das Atomverhältnis Titan aus der Titankomponente (1) : Aluminium aus der Aluminiumkomponente (2) 1 : 10 bis 1 : 800, insbesondere 1 : 20 bis 1 : 300, und das Molverhältnis Aluminiumkomponente (2) : Silankomponente (3) 1 : 0,01 bis 1 : 0,8, insbesondere 1 : 0,02 bis 1 : 0,5 beträgt.

Polymerisationsverfahren dieser Art sind bekannt; ihre Besonderheit gegenüber vergleichbaren anderen Verfahren liegt in der speziellen Ausgestaltung des Katalysatorsystems, wobei als Prototyp für den vorliegenden Fall das aus der EP-A 306 867 bekannte Verfahren genannt werden kann.

Die speziellen Ausgestaltungen der Katalysatorsysteme werden vorgenommen, um bestimmte Ziele zu erreichen, wie die folgenden:

Das Katalysatorsystem soll leicht herstellbar sein und eine hohe Ausbeute an Polymerisat liefern, welches einen möglichst großen isotaktischen Anteil zu enthalten hat. Das Katalysatorsystem soll darüber hinaus Polymerisate mit speziellen morphologischen Eigenschaften erzeugen, etwa im Sinne einer einheitlichen Korngröße und/oder einer Verringerung der Feinstkornanteile und/oder eines hohen Schüttgewichts. Neben diesen für die Beherrschung der Polymerisationssysteme, die Aufarbeitung der Polymerisate und/oder ihre Verarbeitung wichtigen Parametern ist auch ein niedriger Halogengehalt des Polymerisats - besonders im Hinblick auf Korrosionsprobleme - von Bedeutung, was durch Steigerung der Polymerausbeute und/oder ein Katalysatorsystem zu erreichen ist, welches möglichst wenig Halogen enthält.

In der EP-A 306 867 wird nun ein Katalysatorsystem aus einer Titan-, einer Aluminium- und einer Silankomponente beschrieben, wobei die Titankomponente aus einem speziellen Trägerstoff, einem bestimmten Alkanol, Titantetrachlorid und einem speziell ausgewählten Phthalsäureabkömmling besteht. Bei der Herstellung dieser Titankomponente müssen jedoch mehrmalig Zwischenstufen isoliert werden, was verfahrenstechnische Nachteile mit sich bringt. Weiterhin ist die Polymerausbeute noch nicht zufriedenstellend.

Aufgabe der vorliegenden Erfindung war es daher, den genannten Nachteilen abzuhelfen.

Es wurde gefunden, daß die gestellte Aufgabe gelöst werden kann mit einem Katalysatorsystem, das eine aus (I) einem speziellen Trägerstoff, der in definierter Weise aus (Ia) einem bestimmten feinteiligen Kieselgel, das einen relativ hohen Feuchtigkeitsgehalt aufweist, (Ib) einer bestimmten magnesiumorganischen Verbindung und (Ic) einem bestimmten gasförmigen Chlorierungsmittel erhalten worden ist, sowie (II) einem bestimmten Alkanol, (III) Titantetrachlorid sowie (IV) einem speziell ausgewählten Phthalsäureabkömmling in besonderer Weise hergestellte Titankomponente (1) enthält.

Gegenstand der vorliegenden Erfindung ist dementsprechend ein Verfahren zum Herstellen von Homopolymerisaten des Propens sowie Copolymerisaten des Propens mit untergeordneten Mengen anderer $C_2$- bis $C_{12}$ -, insbesondere $C_2$-bis $C_6$-$\alpha$-Monoolefine durch Polymerisation des bzw. der Monomeren bei Temperaturen von 20 bis 160, insbesondere 50 bis 120°C und Drücken von 1 bis 100, insbesondere 20 bis 70 bar, mittels eines Ziegler-Natta-Katalysatorsystems aus

(1) einer Titankomponente, die auf einem feinteiligen, formgebenden Kieselgel basiert und Titan, Magnesium, Chlor sowie ein Benzolcarbonsäurederivat enthält,

(2) einer Aluminiumkomponente der Formel

$$Al\,R_3,$$

worin steht

R für einen nicht mehr als 8, insbesondere nicht mehr als 4 Kohlenstoffatome aufweisenden Alkylrest, sowie

(3) einer Silankomponente der Formel

$$R^1_nSi(OR^2)_{4-n},$$

worin stehen

$R^1$ für einen nicht mehr als 16, vorzugsweise nicht mehr als 10 Kohlenstoffatome aufweisenden Kohlenwasserstoffrest gesättigt-aliphatischer und/oder aromatischer Natur

$R^2$ für einen nicht mehr als 15, vorzugsweise nicht mehr als 8, und insbesondere nicht mehr als 4 Kohlenstoffatome aufweisenden Alyklrest, und

n für eine Zahl von 0 bis 3, vorzugsweise von 0 bis 2, und insbesondere die Zahl 1 oder 2,

mit den Maßgaben, daß das Atomverhältnis Titan aus der Titankomponente (1) : Aluminium aus der Aluminiumkomponente (2) 1 : 10 bis 1 : 800, insbesondere 1 : 20 bis 1 : 300 und das Molverhältnis Aluminiumkomponente (2) : Silankomponente (3) 1 : 0,01 bis 1 : 0,8, insbesondere 1 : 0,02 bis 1 : 0,5 beträgt.

Nach dem erfindungsgemäßen Verfahren wird als Titankomponente (1) eine solche eingesetzt, die erhalten wird, indem man zunächst

(1.1) in einer ersten Stufe (I) einen Trägerstoff herstellt aus (Ia) einem feinteiligen Kieselgel, das das einen Teilchendurchmesser von 1 bis 1000, vorzugsweise 5 bis 500 und insbesondere 10 bis 200 µm, ein Porenvolumen von 0,3 bis 5,0, insbesondere 1,0 bis 3,0 $cm^3/g$, eine Oberfläche von 100 bis 1000, insbesondere 200 bis 500 m2/g besitzt, die Formel $SiO_2$ . a $Al_2O_3$ - worin a steht für eine Zahl im Bereich von 0 bis 2, insbesondere 0 bis 0,5 -hat und einen solchen Feuchtigkeitsgehalt aufweist, daß es bei einer Temperatur von 1000°C im Verlauf von 0,5 Stunden 1 bis 20, vorzugsweise 2 bis 15 und insbesondere 4 bis 10 Gew.% - bezogen auf das anfängliche Gesamtgewicht des Kieselgels - Wasser verliert, (Ib) einer magnesiumorganischen Verbindung der Formel $MgR^3R^4$ - worin $R^3$ und $R^4$ stehen für einen $C_2$- bis $C_{10}$-, vorzugsweise $C_4$- bis $C_8$-Alkylrest - und (Ic) einem gasförmigen Chlorierungsmittel der Formel ClZ -worin Z steht für Cl oder H, vorzugsweise H -, derart, daß man zuerst

(1.1.1) in einer ersten Unterstufe in einem flüssigen inerten Kohlenwasserstoff, insbesondere einem Alkan, unter ständiger Durchmischung bei einer Temperatur von 10 bis 120, insbesondere 20 bis 100°C das feinteilige Kieselgel (Ia) und die magnesiumorganische Verbindung (Ib) zusammenbringt, wobei mengenmäßig eingesetzt werden auf 10 Molteile Silicium des Kieselgels (Ia) 1 bis 10, insbesondere 1,5 bis 5 Molteile der magnesiumorganischen Verbindung (Ib), und das Zusammengebrachte bevorzugt während 0,5 bis 5, insbesondere 1 bis 2 Stunden vorzugsweise bei einer Temperatur im Bereich von 20 bis 140, insbesondere 60 bis 90°C, hält, dann

(1.1.2) in einer zweiten Unterstufe unter ständiger Durchmischung vorzugsweise bei einer Temperatur im Bereich von -20 bis +80, insbesondere 0 bis +60°C, in das aus der ersten Unterstufe Erhaltene das gasförmige Chlorierungsmittel (Ic) einleitet, wobei mengenmäßig eingesetzt werden auf 1 Molteil der magnesiumorganischen Verbindung (IIb) 2 bis 40, insbesondere 5 bis 20 Molteile des Chlorierungsmittels (Ic), das Ganze bevorzugt 0,5 bis 5, insbesondere 0,5 bis 1 Stunden bei einer Temperatur in dem genannten Bereich beläßt, daraufhin

(1.2) in einer zweiten Stufe ein festphasiges Zwischenprodukt herstellt aus (I) dem in der ersten Stufe erhaltenen Trägerstoff, (II) einem $C_2$- bis $C_6$-Alkanol, insbesondere Ethanol, (III) Titantetrachlorid sowie (IV) einem Phthalsäureabkömmling der Formel

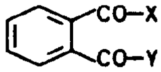

worin stehen X und Y gemeinsam für Sauerstoff oder X sowie Y für Chlor oder einen $C_1$- bis $C_{10}$-, vorzugsweise $C_1$- bis $C_8$-Alkoxyrest, insbesondere für einen Butoxyrest, derart, daß man zuerst

(1.2.1) in einer ersten Unterstufe in einem flüssigen inerten Kohlenwasserstoff, insbesondere einem Alkan, unter ständiger Durchmischung vorzugsweise bei Raumtemperatur den Trägerstoff (I) und das Alkanol (II) zusammenbringt, wobei mengenmäßig eingesetzt werden auf 1 Molteil Magnesium des Trägerstoffs (I) 1 bis 5, insbesondere 2,5 bis 3,5 Molteile des Alkanols (II), und das Zusammengebrachte während vorzugsweise 0,5 bis 5, insbesondere 1 bis 2 Stunden bevorzugt bei einer Temperatur im Bereich von 20 bis 140, insbesondere 70 bis 90°C hält, anschließend

(1.2.2.) in einer zweiten Unterstufe unter ständiger Durchmischung vorzugsweise bei Raumtemperatur in das aus der ersten Unterstufe resultierende Reaktionsgemisch das Titantetrachlorid (III) einbringt, wobei mengenmäßig eingesetzt werden auf 1 Molteil Magnesium des Trägerstoffs (I) 2 bis 20, insbesondere 4 bis 8 Molteile des Titantetrachlorids (III), das Zusammengebrachte bevorzugt während 0,5 bis 5, insbesondere 1 bis 2 Stunden vorzugsweise auf einer Temperatur im Bereich von 10 bis 150, insbesondere 90 bis 120°C hält,
mit der Maßgabe, daß zumindest im Zuge einer der Unterstufen (1.2.1) oder (1.2.2) der Phthalsäureabkömmling (IV) eingebracht wird, wobei mengenmäßig eingesetzt werden auf 1 Molteil Magnesium des Trägerstoffs (I) 0,01 bis 1, vorzugsweise 0,1 bis 0,4, insbesondere 0,25 bis 0,35 Molteile des Phthalsäureabkömmlings (IV), dann

(1.3) in einer dritten Stufe das aus der zweiten Stufe erhaltene festphasige Zwischenprodukt bei einer Temperatur im Bereich von 100 bis 150, insbesondere 115 bis 135°C, während einer Zeitspanne von 0,2 bis 5, insbesondere 1,5 bis 3 Stunden einer ein- oder mehrstufigen oder kontinuierlichen Extraktion mit Titantetrachlorid oder einer Mischung aus Titantetrachlorid und einem bis zu 12, vorzugsweise bis zu 10 Kohlenstoffatome aufweisenden Alkylbenzol, insbesondere Ethylbenzol, deren Gewichtsanteil an Titantetrachlorid mindestens 5, insbesondere mindestens 10 Gew.-%, beträgt, unterzieht, wobei mengenmäßig eingesetzt werden auf 10 Gewichtsteile des aus der zweiten Stufe erhaltenen festphasigen Zwischenprodukts insgesamt 10 bis 1000, vorzugsweise 20 bis 800, insbesondere 40 bis 300 Gewichtsteile des Extraktionsmittels, und schließlich

(1.4) in einer vierten Stufe das in der dritten Stufe entstandene festphasige Produkt solange mit einem flüssigen inerten Kohlenwasserstoff, insbesondere einem Alkan, wäscht, bis der Kohlenwasserstoff weniger als 2, vorzugsweise weniger 1 Gew.-% Titantetrachlorid enthält - und derart die Titankomponente (1) gewinnt, wobei es kennzeichnend ist, daß keine Isolierung des jeweils resultierenden Feststoffs in den Stufen (1.1) und (1.2) erfolgt und daß in der Stufe (1.1.2) die gesamte flüssige Phase im Reaktionsgefäß verbleibt und ohne Abtrennung der flüssigen Phase zur Stufe (1.2) übergegangen wird.

Wie sich gezeigt hat, läßt sich das erfindungsgemäße Verfahren mit besonders gutem Erfolg durchführen, wenn ein Katalysatorsystem eingesetzt wird, dessen Silankomponente (3) eine solche ist, in deren - Formel

$$R^1_nSi(OR^2)_{4-n}$$

stehen

$R^1$ für einen Phenylrest oder $C_1$- bis $C_4$-Alkyl-phenylrest, vorzugsweise Methyl-phenylrest oder Ethyl-phenylrest und vor allem einen p-Methyl-phenylrest,

$R^2$ für einen nicht mehr als 4 Kohlenstoffatome aufweisenden Alkylrest, vor allem einen Methyl- oder Ethylrest, und

n für die Zahl 1 oder 2

Zu dem erfindungsgemäßen Verfahren ist im einzelnen das folgende zu bemerken:
Das Polymerisationsverfahren als solches kann - unter Beachtung der kennzeichnenden Besonderheit - in praktisch allen einschlägig üblichen technologischen Ausgestaltungen durchgeführt werden, etwa als diskontinuierliches, taktweises oder - insbesondere - kontinuierliches Verfahren, bevorzugt als Suspensionspolymerisationsverfahren. Die

erwähnten technologischen Ausgestaltungen - mit anderen Worten: die technologischen Varianten der Polymerisation von α-Monoolefinen nach Ziegler-Natta - sind aus der Literatur und Praxis wohlbekannt, so daß sich nähere Ausführungen zu ihnen erübrigen.

Der Vollständigkeit halber ist zu erwähnen, daß sich beim erfindungsgemäßen Verfahren auch die Molekulargewichte der Polymerisate durch die einschlägig üblichen Maßnahmen regeln lassen, z.B. mittels Reglern, wie insbesondere Wasserstoff.

Was die stoffliche Seite des neuen Katalysatorsystems betrifft, ist im einzelnen das folgende zu sagen:

(1) Das zur Herstellung der Titankomponente einzusetzende kleinteilige Kieselgel (Ia) wird im allgemeinen ein Alumosilikat oder - insbesondere - ein Siliciumdioxid sein; wichtig ist, daß es die geforderten Eigenschaften besitzt. Wie sich gezeigt hat, sind die der gegebenen Spezifikation entsprechenden im Handel erhältlichen, für Trägerstoffe einschlägig üblichen Kieselgele gut geeignet. Von besonderer Bedeutung ist, daß das Kieselgel einen solchen Feuchtigkeitsgehalt aufweist, daß es bei einer Temperatur von 1000°C Verlauf von 0,5 Stunden 1 bis 20, vorzugsweise 2 bis 15 und insbesondere 4 bis 10 Gew.% - bezogen auf das anfängliche Gesamtgewicht des Kieselgels - Wasser verliert (Meßmethode: Differential-Thermogravimetrie.)

Die gleichfalls einzusetzende magnesiumorganische Verbindung (Ib) kann z.B. Dibutylmagnesium, Dihexylmagnesium und insbesondere Butyloctylmagnesium sein.

Das ferner einzusetzende gasförmige Chlorierungsmittel (Ic) sollte möglichst trocken und rein sein; es besteht aus Chlor oder insbesondere Chlorwasserstoff.

Der als Hilfsstoff dienende flüssige inerte Kohlenwasserstoff kann ein Kohlenwasserstoff der Art sein, die üblicherweise mit Titankomponenten für Katalysatorsysteme des Ziegler-Natta-Typs ohne Schaden für das Katalysatorsystem bzw. dessen Titankomponente zusammengebracht wird. Als Beispiele für geeignete Kohlenwasserstoffe seien genannt: Pentane, Hexane, Heptane, Benzine und Cyclohexan.

Die zur Herstellung der Titankomponente (1) einzusetzenden Alkanole (II) können handelsübliche sein; sie sollten vorteilhafterweise relativ hohe Reinheitsgrade aufweisen. Gut geeignet sind z.B. Ethanol, n-Propyl-, i-Propyl-, n-Butyl-, i-Butyl- oder tert.-Butylalkohol; besonders geeignet ist Ethanol.

Das zur Herstellung der Titankomponente (1) ebenfalls einzusetzende Titantetrachlorid (III) sollte ein bei Ziegler-Natta-Katalysatorsystemen übliches sein; der gegebenenfalls im Gemisch mit dem Titantetrachlorid einzusetzende Kohlenwasserstoff sollte möglichst rein und trocken sein.

Auch der einzusetzende, oben näher definierte Phthalsäureabkömmling (IV) kann ein handelsüblicher sein; er sollte vorteilhafterweise einen hohen Reinheitsgrad aufweisen. Wie sich gezeigt hat, ist für den erfindungsgemäßen Zweck ganz besonders gut geeignet der Phthalsäuredibutylester; aber auch andere Phthalsäuredialkylester sowie Phthalsäureanhydrid und Phthalsäuredichlorid sind geeignet.

Der zur Herstellung der Titankomponente (1) in Stufe (1.4) einzusetzende Kohlenwasserstoff kann ebenfalls ein üblicher sein; er sollte vorteilhafterweise einen relativ hohen Reinheitsgrad aufweisen.

Die Herstellung der Titankomponente (1) ist einfach und für den Fachmann ohne Erläuterungen möglich. Zu den Stufen (1.1) und (1.2) ist lediglich zu erwähnen, daß keine Isolierung des jeweils resultierenden Feststoffs erfolgt, und es ist insbesondere darauf zu achten, daß in der Stufe (1.1.2) die gesamte flüssige Phase im Reaktionsgefäß verbleibt und ohne Abtrennung der flüssigen Phase zur Stufe (1.2) übergegangen wird.

In der Stufe (1.1.2) sollte das festphasige Zwischenprodukt mit mindestens 5 % der flüssigen Phase benetzt bleiben und sollte keinesfalls trocken isoliert werden.

In der Stufe (1.3) kann das festphasige Zwischenprodukt isoliert werden, beispielsweise durch Filtration, es sollte aber nicht getrocknet werden.

(2) Als Aluminiumkomponenten (2) mit der angegebenen Formel kommen die einschlägig üblichen, dieser Formel gehorchenden in Betracht; sie sind aus Literatur und Praxis so wohlbekannt, daß auf sie nicht näher eingegangen zu werden braucht. Als herausragender Vertreter sei beispielsweise genannt Triethylaluminium.

(3) Die das Katalysatorsystem vervollständigende Silankomponente (3) ist insbesondere ein Trialkoxyalkylphenylsilan oder ein Dialkoxydialkylphenylsilan der angegebenen Formel. Als herausragende Vertreter sind zu nennen das Triethoxytoluylsilan sowie das Dimethoxyditoluylsilan; ferner seien beispielsweise genannt Triethoxyethyl-phenylsilan, Trimethoxytoluylsilan sowie Diethoxyditoluylsilan.

Das erfindungsgemäße Verfahren erlaubt es, Homo- und Copolymerisate, z.B. des binären oder ternären Typs, - auch Blockcopolymerisate - des Propens mit untergeordneten Mengen anderer $C_2$- bis $C_{12}$-α-Monoolefine in vorteilhafter Weise herzustellen, wobei besonders geeignete zu polymerisierende α-Monoolefine als Comonomere Ethen, Buten-1, 4-Methylpenten-1 und Hexen-1 sind; es eignen sich aber auch z.B. n-Okten-1, n-Decen-1 sowie n-Dodecen-1.

Beispiel 1

Herstellung von Polypropylen

a) Herstellen der Titankomponente (1)

Es wurde so verfahren, daß man zunächst

(1.1) in einer ersten Stufe (I) einen Trägerstoff herstellte aus (Ia) einem feinteiligen Kieselgel, das einen Teilchendurchmesser von 20 bis 45 µm, ein Porenvolumen von 1,75 $cm^3/g$, eine Oberfläche von 320 $m^2/g$ besaß, die Formel $SiO_2$ hatte und einen solchen Feuchtigkeitsgehalt aufwies, daß es bei einer Temperatur von 1000°C im Verlauf von 0,5 Stunden 7,4 Gew.% - bezogen auf das anfängliche Gesamtgewicht des Kieselgels - Wasser verlor (Meßmethode: Differential-Thermogravimetrie), (Ib) Butyl-octylmagnesium und (Ic) Chlorwasserstoff, derart, daß man zuerst

(1.1.1) in einer ersten Unterstufe in n-Heptan, unter ständiger Durchmischung mittels Rühren bei Raumtemperatur das feinteilige Kieselgel (Ia) und die magnesiumorganische Verbindung (Ib) zusammenbrachte, wobei mengenmäßig eingesetzt wurden auf 10 Molteile Silicium des Kieselgels (Ia) 5,0 Molteile der magnesiumorganischen Verbindung (Ib), und das Zuammengebrachte während 1,5 Stunden bei einer Temperatur im Bereich von 90°C hielt, dann

(1.1.2) in einer zweiten Unterstufe unter ständiger Durchmischung mittels Rühren bei einer Temperatur im Bereich von 20°C in das aus der ersten Unterstufe Erhaltene das gasförmige Chlorierungsmittel (Ic) einleitete, wobei mengenmäßig eingesetzt wurden auf 1 Molteil der magnesiumorganischen Verbindung (Ib) 10 Molteile des Chlorierungsmittels (Ic) und das Ganze 0,5 Stunden bei einer Temperatur in dem genannten Bereich beließ, daraufhin

(1.2) in einer zweiten Stufe ein festphasiges Zwischenprodukt herstellte aus (I) dem in der ersten Stufe erhaltenen Trägerstoff, (II) Ethanol, (III) Titantetrachlorid sowie (IV) Phthalsäure-di-n-butylester, derart, daß man zuerst

(1.2.1) in einer ersten Unterstufe in n-Heptan unter ständiger Durchmischung mittels Rühren bei Raumtemperatur den Trägerstoff (I) und das Ethanol (II) zusammenbrachte - wobei mengenmäßig eingesetzt werden auf 1 Molteil Magnesium des Trägerstoffs (I) 3 Molteile des Ethanols (II) - und das Zusammengebrachte während 1,5 Stunden bei einer Temperatur im Bereich von 80°C hielt, anschließend

(1.2.2) in einer zweiten Unterstufe unter ständiger Durchmischung mittels Rühren bei Raumtemperatur in das aus der ersten Unterstufe resultierende Reaktionsgemisch das Titantetrachlorid (III) einbrachte - wobei mengenmäßig eingesetzt wurden auf 1 Molteil Magnesium des Trägerstoffs (I) 6 Molteile des Titantetrachlorids (III) - anschließend den Phthalsäuredi-n-butylester einbrachte - wobei mengenmäßig eingesetzt wurden auf 1 Molteil Magnesium des Trägerstoffs (I) 0,30 Molteile des Phthalsäureesters (IV) - das aus der ersten Unterstufe Erhaltene - das Zusammengebrachte unter Rühren während 2 Stunden auf einer Temperatur im Bereich von 120°C hielt, dann

(1.3) in einer dritten Stufe das aus der zweiten Stufe erhaltene festphasige Zwischenprodukt bei einer Temperatur von 125°C während einer Zeitspanne von 2 Stunden einer kontinuierlichen Extraktion mit einer Mischung aus Titantetrachlorid und Ethylbenzol, deren Anteil an Titantetrachlorid 15 Gew.% betrug, unterzog - wobei mengenmäßig eingesetzt werden auf 10 Gew.-Teile des aus der zweiten Stufe erhaltenen festphasigen Zwischenprodukts 140 Gew.-Teile des Titantetrachlorid/Ethylbenzol-Gemischs - hierauf das entstandene festphasige Zwischenprodukt mittels Filtration isolierte und schließlich

(1.4) in einer vierten Stufe das in der dritten Stufe gewonnene festphasige Produkt solange mit n-Heptan wusch, bis das n-Heptan weniger als 0,3 Gew.% Titantetrachlorid enthielt - und derart die Titankomponente (1) gewann; sie enthielt 2,6 Gew.-% Titan, 9,7 Gew.-% Magnesium und 32,2 Gew.-% Chlor.

Zur Herstellung der Titankomponente wurden 14 Stunden benötigt.

b) Polymerisation

Ein Stahlautoklav von 10-1-Volumen, ausgerüstet mit einem Rührer, wurde mit 50 g Polypropenpulver, 10 mMol Aluminiumtriethyl (in Form einer 1-molaren Lösung in n-Heptan) als Aluminiumkomponente (2), 1 mMol Triethoxytoluylsilan (in Form einer 1-molaren Lösung in n-Heptan) als Silankomponente (3), 5 Normalliter Wasserstoff und schließlich 100 mg ($\hat{=}$ 0,05 mMol Titan), der oben beschriebenen Titankomponente (1) bei 30°C beschickt. Die Reaktortemperatur wurde binnen 10 Minuten auf 70°C, der Reaktordruck mittels Aufpressen von gasförmigem Propen in dieser Zeit auf 28 bar gebracht.

Die eigentliche Polymerisation wurde unter ständigem Rühren bei 70°C und 28 bar während 2 Stunden durchgeführt, hierbei verbrauchtes Monomer wurde kontinuierlich durch frisches ersetzt.

Vergleichsbeispiel V1

Es wurde wie in Beispiel 1 gearbeitet, jedoch sowohl in der Stufe (1.1.2) als auch in der Stufe (1.2.2) das festphasige Zwischenprodukt unter Abtrennung der flüssigen Phase isoliert und als isolierter Feststoff in der nächsten Stufe eingesetzt.

Zur Herstellung der Titankomponente wurden 24 Stunden benötigt. Zudem waren Einrichtungen zum Trocknen und zur Feststoffdosierung erforderlich.

Die Produktivitäten der Katalysatorkomponenten (1), die heptanlöslichen Anteile (als Maß für die Isotaktizität), die Kornverteilungen und die Chlorgehalte der dabei erhaltenen Polypropylene sind in der nachstehenden Tabelle zusammengestellt.

Tabelle

| | | Beispiel 1 | Vgl.bsp.V1 |
|---|---|---|---|
| Produktivität [g Polypropylen/g Katalysator] | | 20.000 | 17.000 |
| Heptanlösliche Anteile [Gew.%] | | 1,6 | 1,6 |
| Kornverteilung [mm]: | <0,25 | 3,6 | 4,5 |
| | 0,25-0,50 | 7,1 | 6,8 |
| | 0,50-1,00 | 25,0 | 28,6 |
| | 1,00-2,00 | 62,0 | 58,1 |
| | >2,00 | 2,3 | 2,0 |
| Chlorgehalt [ppm] | | 16 | 19 |

## Patentansprüche

**1.** Verfahren zum Herstellen von Homopolymerisaten des Propens sowie Copolymerisaten des Propens mit untergeordneten Mengen anderer $C_2$- bis $C_{12}$-$\alpha$-Monoolefine durch Polymerisation des bzw. der Monomeren bei Temperaturen von 20 bis 160°C und Drücken von 1 bis 100 bar mittels eines Ziegler-Natta-Katalysatorsystems aus

(1) einer Titankomponente, die auf einem feinteiligen, formgebenden Kieselgel basiert und Titan, Magnesium, Chlor sowie ein Benzolcarbonsäurederivat enthält,

(2) einer Aluminiumkomponente der Formel

$$Al\ R_3,$$

worin steht

R für einen nicht mehr als 8 Kohlenstoffatome aufweisenden Alkylrest, sowie

(3) einer Silankomponente der Formel

$$R^1_nSi(OR^2)_{4-n},$$

worin stehen

$R^1$ für einen nicht mehr als 16 Kohlenstoffatome aufweisenden Kohlenwasserstoffrest gesättigt-aliphatischer und/oder aromatischer Natur,
$R^2$ für einen nicht mehr als 15 Kohlenstoffatome aufweisenden Alkylrest, und
n für eine Zahl von 0 bis 3,

mit den Maßgaben, daß das Atomverhältnis Titan aus der Titankomponente (1) : Aluminium aus der Aluminiumkomponente (2) 1 : 10 bis 1 : 800 und das Molverhältnis Aluminiumkomponente (2) : Silankomponente (3) 1 : 0,01 bis 1 : 0,8 beträgt, wobei man als Titankomponente (1) eine solche einsetzt, die erhalten wird, indem man zunächst

(1.1) in einer ersten Stufe (I) einen Trägerstoff herstellt aus (Ia) einem feinteiligen Kieselgel, das einen Teilchendurchmesser von 1 bis 1000 µm, ein Porenvolumen von 0,3 bis 5 $cm^3/g$, eine Oberfläche von 100 bis 1000 $m^2/g$ besitzt, die Formel $SiO_2 . a Al_2O_3$ - worin a steht für eine Zahl im Bereich von 0 bis 2 - hat und einen solchen Feuchtigkeitsgehalt aufweist, daß es bei einer Temperatur von 1000°C im Verlauf von 0,5 Stunden 1 bis 20 Gew.% - bezogen auf das anfängliche Gesamtgewicht des Kieselgels - Wasser verliert, (Ib) einer magnesiumorganischen Verbindung der Formel $MgR^3R^4$ - worin $R^3$ und $R^4$ stehen für einen $C_2$- bis $C_{10}$-Alkylrest - und (Ic) einem gasförmigen Chlorierungsmittel der Formel ClZ - worin Z steht für Cl oder H -, derart, daß man zuerst

(1.1.1) in einer ersten Unterstufe in einem flüssigen inerten Kohlenwasserstoff unter ständiger Durchmischung bei einer Temperatur von 10 bis 120°C das feinteilige Kieselgel (Ia) und die magnesiumorganische Verbindung (Ib) zusammenbringt, wobei mengenmäßig eingesetzt werden auf 10 Molteile Silicium des Kieselgels (Ia) 1 bis 10 Molteile der magnesiumorganischen Verbindung (Ib), und das Zusammengebrachte dann

(1.1.2) in einer zweiten Unterstufe unter ständiger Durchmischung in das aus der ersten Unterstufe Erhaltene das gasförmige Chlorierungsmittel (Ic) einleitet, wobei mengenmäßig eingesetzt werden auf 1 Molteil der magnesiumorganischen Verbindung (Ib) 2 bis 40 Molteile des Chlorierungsmittels (Ic), daraufhin

(1.2) in einer zweiten Stufe ein festphasiges Zwischenprodukt herstellt aus (I), dem in der ersten Stufe erhaltenen Trägerstoff, (II) einem $C_1$- bis $C_8$-Alkanol, (III) Titantetrachlorid sowie (IV) einem Phthalsäureabkömmling der Formel

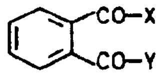

worin stehen X und Y gemeinsam für Sauerstoff oder X sowie Y für Chlor oder einen $C_1$- bis $C_{10}$-Alkoxyrest, derart, daß man zuerst

(1.2.1) in einer ersten Unterstufe in einem flüssigen inerten Kohlenwasserstoff unter ständiger Durchmischung den Trägerstoff (I) und das Alkanol (II) zusammenbringt, wobei mengenmäßig eingesetzt werden auf 1 Molteil Magnesium des Trägerstoffs (I) 1 bis 5 Molteile des Alkanols (II) und das Zusammengebrachte anschließend

(1.2.2) in einer zweiten Unterstufe unter ständiger Durchmischung in das aus der ersten Unterstufe resultierende Reaktionsgemisch das Titantetrachlorid (III) einbringt, wobei mengenmäßig eingesetzt werden auf 1 Molteil Magnesium des Trägerstoffs (1) 2 bis 20 Molteile des Titantetrachlorids (III),
mit der Maßgabe, daß zumindest im Zuge einer der Unterstufen (1.2.1) bis (1.2.2) der Phthalsäureabkömmling (IV) eingebracht wird, wobei mengenmäßig eingesetzt werden auf 1 Molteil Magnesium des Trägerstoffs (I) 0,01-bis 1 Molteile des Phthalsäureabkömmlings (IV), dann

(1.3) in einer dritten Stufe das aus der zweiten Stufe erhaltene festphasige Zwischenprodukt bei einer Temperatur im Bereich von 100 bis 150°C während einer Zeitspanne von 0,2 bis 5 Stunden einer ein- oder mehrstufigen oder kontinuierlichen Extraktion mit Titantetrachlorid oder einer Mischung aus Titantetrachlorid und einem bis zu 12 Kohlenstoffatome aufweisenden Alkylbenzol, deren Gewichtsanteil an Titantetrachlorid mindestens 5 % beträgt, unterzieht, wobei mengenmäßig eingesetzt werden auf 10 Gewichtsteile des aus der zweiten Stufe erhaltenen festphasigen Zwischenprodukts insgesamt 10 bis 1000 Gew.-Teile des Extraktionsmittels, und schließlich

(1.4) in einer vierten Stufe das in der dritten Stufe entstandene festphasige Produkt solange mit einem flüssigen inerten Kohlenwasserstoff wäscht, bis der Kohlenwasserstoff weniger als 2 Gew.-% Titantetrachlorid enthält - und derart die Titankomponente (1) gewinnt, dadurch gekennzeichnet, daß keine Isolierung des jeweils resultierenden Feststoffs in den Stufen (1.1) und (1.2) erfolgt und daß in der Stufe (1.1.2) die gesamte flüssige Phase im Reaktionsgefäß verbleibt und ohne Abtrennung der flüssigen Phase zur Stufe (1.2) übergegangen wird.

**2.** Verfahren gemäß Patentanspruch 1, dadurch gekennzeichnet, daß ein Katalysatorsystem eingesetzt wird, dessen

Silankomponente (3) eine solche ist, in deren Formel

$$R^1_nSi(OR^2)_{4-n}$$

stehen

$R^1$ für einen Phenylrest oder $C_1$- bis $C_4$-Alkyi-phenylrest,
$R^2$ für einen nicht mehr als 4 Kohlenstoffatome aufweisenden Alkylrest, und
n für die Zahl 1 oder 2.

**3.** Verfahren gemäß patentanspruch 2, dadurch gekennzeichnet, daß ein Katalysatorsystem eingesetzt wird, dessen Silankomponente (3) eine solche ist, in deren Formel

$$R^1_nSi(OR^2)_{4-n}$$

stehen

$R^1$ für einen Methyl-phenylrest oder Ethyl-phenylrest
$R^2$ für einen Methyl- oder Ethyl-rest
n für die Zahl 1 oder 2.

## Claims

**1.** A process for the preparation of a homopolymer of propene or a copolymer of propene with minor amounts of other $C_2$-$C_{12}$-$\alpha$-monoolefins by polymerization of the monomer or monomers at from 20 to 160°C and from 1 to 100 bar by means of a Ziegler-Natta catalyst system comprising

(1) a titanium component which is based on a finely divided, shape-imparting silica gel and contains titanium, magnesium, chlorine and a benzene-carboxylic acid derivative,
(2) an aluminum component of the formula

$$AlR_3$$

where R is alkyl of not more than 8 carbon atoms,
and
(3) a silane component of the formula

$$R^1_nSi(OR^2)_{4-n}$$

where $R^1$ is a saturated aliphatic or aromatic hydrocarbon radical of not more than 16 carbon atoms, $R^2$ is alkyl of not more than 15 carbon atoms and n is from 0 to 3,

with the provisos that the atomic ratio of titanium from the titanium component (1) to aluminum from the aluminum component (2) is from 1 : 10 to 1 : 800 and the molar ratio of the aluminum component (2) to the silane component (3) is from 1 : 0.01 to 1 : 0.8, the titanium component (1) used being one which is obtained by a method in which first

(1.1) in a first stage, (I) a carrier is prepared from (Ia) a finely divided silica gel which has a particle diameter of from 1 to 1,000 µm, a pore volume of from 0.3 to 5 $cm^3/g$ and a surface area of from 100 to 1,000 $m^2/g$, is of the formula $SiO_2 \cdot aAl_2O_3$, where a is from 0 to 2, and possesses a moisture content such that it loses from 1 to 20% by weight, based on the initial total weight of the silica gel, of water at 1,000°C in the course of 0.5 hour, (Ib) an organomagnesium compound of the formula $MgR^3R^4$, where $R^3$ and $R^4$ are each $C_2$-$C_{10}$-alkyl, and (Ic) a gaseous chlorinating agent of the formula ClZ, where Z is Cl or H, in a manner such that first
(1.1.1) in a first substage, the finely divided silica gel (Ia) and the organomagnesium compound (Ib) are combined in a liquid inert hydrocarbon with constant thorough mixing at from 10 to 120°C, from 1 to 10 molar parts of the organomagnesium compound (Ib) being used per 10 molar parts of silicon of the silica gel (Ia), and the combined substances are then kept at from 20 to 140°C for from 0.5 to 5 hours, then
(1.1.2) in a second substage, the gaseous chlorinating agent (Ic) is passed into the mixture obtained from the first substage with constant thorough mixing, from 2 to 40 molar parts of the chlorinating agent (Ic) being used per molar part of the organomagnesium compound (Ib), thereafter
(1.2) in a second stage, a solid-phase intermediate is prepared from (I), the carrier obtained in the first stage, (II) a $C_1$-$C_8$-alkanol, (III) titanium tetrachloride and (IV) a phthalic acid derivative of the formula

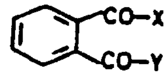

where X and Y together are oxygen or X and Y are each chlorine or $C_1$-$C_{10}$-alkoxy, in a manner such that first (1.2.1) in a first substage, the carrier (I) and the alkanol (II) are combined in a liquid inert hydrocarbon with constant thorough mixing, from 1 to 5 molar parts of the alkanol (II) being used per molar part of magnesium of the carrier (I), and the combined substances are then kept at from 20 to 140°C for from 0.5 to 5 hours, then (1.2.2) in a second substage, the titanium tetrachloride (III) is introduced into the reaction mixture resulting from the first substage with constant thorough mixing, from 2 to 20 molar parts of the titanium tetrachloride (III) being used per molar part of magnesium of the carrier (I), with the proviso that the phthalic acid derivative (IV) is introduced at least in the course of one of the substages (1.2.1) to (1.2.2), from 0.01 to 1 molar part of the phthalic acid derivative (IV) being used per molar part of magnesium of the carrier (I), then

(1.3) in a third stage, the solid-phase intermediate obtained from the second stage is subjected, at from 100 to 150°C for a period of from 0.2 to 5 hours, to a one-stage or multistage or continuous extraction with titanium tetrachloride or with a mixture of titanium tetrachloride and an alkylbenzene of up to 12 carbon atoms, whose content of titanium tetrachloride is at least 5% by weight, a total of from 10 to 1,000 parts by weight of the extraction agent being used per 10 parts by weight of the solid-phase intermediate obtained from the second stage, and finally

(1.4) in a fourth stage, the solid-phase product formed in the third stage is washed with a liquid inert hydrocarbon until the hydrocarbon contains less than 2% by weight of titanium tetrachloride, and the titanium component (I) is thus obtained, wherein the resulting solid in each case is not isolated in stages (1.1) and (1.2), and the total liquid phase remains in the reaction vessel in stage (1.1.2), and stage (1.2) is started without separating off the liquid phase.

**2.** A process as claimed in claim 1, wherein a catalyst system is used whose silane component (3) is of the formula

$$R^1_n Si (OR^2)_{4-n}$$

where $R^1$ is phenyl or $C_1$-$C_4$-alkylphenyl, $R^2$ is alkyl of not more than 4 carbon atoms and n is 1 or 2.

**3.** A process as claimed in claim 2, wherein a catalyst system is used whose silane component (3) is of the formula

$$R^1_n Si (OR^2)_{4-n}$$

where $R^1$ is methylphenyl or ethylphenyl, $R^2$ is methyl or ethyl and n is 1 or 2.

**Revendications**

**1.** Procédé de préparation d'homopolymères du propylène, ainsi que de copolymères du propylène et de quantités mineures d'autres α-monooléfines en $C_2$-$C_{12}$, par polymérisation du ou des monomères à des températures de 20 à 160°C et sous des pressions de 1 à 100 bar, au moyen d'un système catalytique de Ziegler-Natta comprenant

1) un composant au titane qui est fixé sur un gel de silice en fines particules lui donnant sa forme et qui contient du titane, du magnésium, du chlore ainsi qu'un dérivé d'acide benzènecarboxylique,

2) un composant à l'aluminium de formule

$$Al\ R_3$$

dans laquelle
R est mis pour un reste alkyle ne renfermant pas plus de 8 atomes de carbone, et

3) un composant au silane de formule

$$R^1_n Si(OR^2)_{4-n}$$

dans laquelle

$R^1$ est mis pour un reste hydrocarboné de nature aliphatique saturée et/ou aromatique, ne renfermant pas plus de 16 atomes de carbone,
$R^2$ est mis pour un reste alkyle ne renfermant pas plus de 15 atomes de carbone, et n est mis pour un nombre de 0 à 3,
étant spécifié que le rapport atomique du titane du composant au titane (1) à l'aluminium du composant à l'aluminium (2) est compris entre 1:10 et 1:800 et que le rapport moléculaire du composant à l'aluminium

(2) au composant au silane (3) est compris entre 1:0,01 et 1:0,8,
dans lequel on utilise, comme composant au titane (1), un composant que l'on obtient

(1.1) en commençant par préparer, dans une première étape, (I) un support à partir de: (Ia) un gel de silice en fines particules qui a un diamètre de particules de 1 à 1000 μm, un volume de pores de 0,3 à 5 $cm^3$/g, une surface de 100 à 1000 $m^2$/g, répond à la formule $SiO_2 . a Al_2O_3$ - où a est mis pour un nombre de 0 à 2 - et présente une teneur en humidité telle qu'à une température de 1000°C, il perd, en l'espace de 0,5 heure, 1 à 20% en poids d'eau par rapport au poids total initial du gel de silice, (Ib) un composé organomagnésien de formule $MgR^3R^4$ - où $R^3$ et $R^4$ sont mis chacun pour un reste alkyle en $C_2$-$C_{10}$ - et (Ic) un agent de chloration gazeux de formule ClZ - où Z est mis pour Cl ou H -, en procédant de la manière suivante:
(1.1.1) dans une première sous-étape, on met d'abord en contact le gel de silice en fines particules (Ia) et le composé organomagnésien (Ib) dans un hydrocarbure liquide inerte, sous mélange constant a une température de 10 à 120°C, en utilisant, pour 10 parties en moles de silicium du gel de silice (Ia), 1 à 10 parties en moles du composé organomagnésien (Ib), et
(1.1.2) dans une seconde sous-étape, on fait passer l'agent de chloration gazeux (Ic) dans le produit obtenu dans la première sous-étape sous mélange constant, en utilisant, pour 1 partie en moles du composé organomagnésien (Ib), 2 à 40 parties en moles de l'agent de chloration (Ic), puis,
(1.2) dans une deuxième étape, en préparant un produit intermédiaire en phase solide à partir de (I), le support obtenu dans la première étape, (II) un alcanol en $C_1$-$C_8$, (III) du tétrachlorure de titane et (IV) un dérivé d'acide phtalique de formule

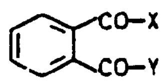

dans laquelle X et Y sont mis en commun pour un atome d'oxygène ou X et Y sont mis chacun pour un atome de chlore ou un reste alcoxy en $C_1$-$C_{10}$, en procédant de la manière suivante:
(1.2.1) dans une première sous-étape, on met en contact le support (I) et l'alcanol (II) dans un hydrocarbure liquide inerte sous mélange constant, en utilisant, pour 1 partie en moles de magnésium du support (I), 1 à 5 parties en moles de l'alcanol (II), et
(1.2.2) dans une seconde sous-étape on introduit sous mélange constant le tétrachlorure de titane (III) dans le mélange réactionnel résultant de la première sous-étape, en utilisant, pour 1 partie en mole de magnésium du support (I), 2 à 20 parties en moles du tétrachlorure de titane (III),
étant spécifié qu'au cours de l'une au moins des sous-étapes (1.2.1) et (1.2.2), le dérivé d'acide phtalique (IV) est introduit, en utilisant, pour 1 partie en moles de magnésium du support (I), 0,01 à 1 partie en moles du dérivé d'acide phtalique (IV), puis
(1.3) dans une troisième étape, en soumettant le produit intermédiaire en phase solide obtenu dans la deuxième étape, à une température comprise entre 100 et 150°C et pendant un laps de temps de 0,2 à 5 h, à une extraction en un ou plusieurs temps ou continue, avec du tétrachlorure de titane ou un mélange de tétrachlorure de titane et d'un alkylbenzène renfermant jusqu'à 12 atomes de carbone, la proportion en poids de tétrachlorure de titane s'élevant au moins à 5%, en utilisant au total, pour 10 parties en poids du produit intermédiaire en phase solide obtenu dans la deuxième étape, 10 à 1000 parties en poids de l'agent d'extraction, et enfin
(1.4) dans une quatrième étape, en lavant le produit en phase solide formé dans la troisième étape avec un hydrocarbure liquide inerte, jusqu'à ce que l'hydrocarbure contienne moins de 2% en poids de tétrachlorure de titane, pour obtenir ainsi le composant au titane (1),

caractérisé en ce qu'il n'est pas procédé à l'isolement de la substance solide résultant de chacune des étapes (1.1) et (1.2), et en ce que, dans l'étape (1.1.2), la totalité de la phase liquide reste dans le réacteur et on passe à l'étape (1.2) sans séparation de la phase liquide.

**2.** Procédé selon la revendication 1, caractérisé en ce que l'on utilise un système catalytique dont le composant au silane (3) est un composant dans la formule

$$R^1{}_nSi(OR^2)_{4-n}$$

duquel

$R^1$ est mis pour un reste phényle ou un reste (alkyl en $C_1$-$C_4$)phényle,
$R^2$ est mis pour un reste alkyle ne renfermant pas plus de 4 atomes de carbone, et

n est mis pour le nombre 1 ou 2.

3. Procédé selon la revendication 2, caractérisé en ce que l'on utilise un système catalytique dont le composant au silane (3) est un composant dans la formule

$$R^1_n \, Si(OR^2)_{4-n}$$

duquel

$R^1$ est mis pour un reste méthylphényle ou un reste éthylphényle,
$R^2$ est mis pour un reste méthyle ou éthyle, et
n est mis pour le nombre 1 ou 2.